# EUROPÄISCHE PATENTANMELDUNG

(11) **EP 2 436 477 A1**
(43) Veröffentlichungstag der Anmeldung: **04.04.2012**
(21) Anmeldenummer: 11180433.2
(22) Anmeldetag: 07.09.2011
(51) Int. Cl.: B23Q 1/01, B23Q 39/02, B27B 5/065, B27C 9/04, B27M 1/08, E04B 1/78

(54) **Arbeitsstation und Verfahren zum Bearbeiten einer Isolierplatte**

(30) Priorität: 29.09.2010 DE 102010046879
(71) Anmelder: Vollert Anlagenbau GmbH, 74189 Weinsberg (DE)
(72) Erfinder: Vollert, Hans-Jörg, 74189 Weinsberg (DE); Marrié, Philippe, 76199 Karlsruhe (DE)
(74) Vertreter: KEIL & SCHAAFHAUSEN Patentanwälte

(57) **Zusammenfassung**

Die Erfindung betrifft eine Arbeitsstation (1) zur individuellen, automatischen Bearbeitung von Isolierplatten (6). Derartige Isolierplatten (6) können in einem Verfahren zur Herstellung eines Betonteils mit diesem Verankert werden. Die Arbeitsstation (1) weist einen Tisch (5) zur Aufnahme wenigstens einer zu bearbeitenden Isolierplatte (6), eine Fördereinrichtung (7, 13, 14) zum Transport von Isolierplatten (6) zu und von dem Tisch (5) und wenigstens eine Werkzeugmaschine (3) mit Werkzeugen (4) auf, die zur Bearbeitung einer Isolierplatte (6) neben und/oder über dem Tisch (5) positionierbar sind. Der Werkzeugmaschine (3) ist eine Steuerung (15) zugeordnet, so dass die Werkzeugmaschine (3) durch gleichzeitiges oder aufeinanderfolgendes Bohren und/oder Schneiden automatisiert eine Isolierplatte (6) bearbeiten kann. (Fig. 1)

## Beschreibung

Die Erfindung betrifft eine Arbeitsstation zur individuellen, automatisierten Bearbeitung von Isolierplatten, insbesondere Hartschaumplatten aus Styropor oder dergleichen. Die Arbeitsstation weist einen Tisch zur Aufnahme wenigstens einer zu bearbeitenden Isolierplatte, eine Fördereinrichtung zum Transport von Isolierplatten zu und von dem Tisch sowie wenigstens eine Werkzeugmaschine mit Werkzeugen auf, die zur Bearbeitung einer Isolierplatte neben und/oder über dem Tisch positionierbar sind. Weiter betrifft die Erfindung ein Verfahren zum Bearbeiten einer Isolierplatte.

Im Hausbau werden für Decken und Wände zunehmend in Fertigbauweise oder Halbfertigbauweise erstellte Elemente in einem Betonteilwerk vorgefertigt, die dann vor Ort mit vergleichsweise geringem Arbeitsaufwand aufgebaut bzw. fertiggestellt werden müssen. Hierzu sind Wandelemente bekannt, die im Wesentlichen als eine einstückige Platte ausgebildet sind, welche gegebenenfalls werksseitig mit einer Isolierschicht versehen wird. Alternativ werden Doppelwand-Systeme eingesetzt, bei welchen zwei miteinander verbundene und parallel zueinander ausgerichtete Wände auf der Baustelle mit Ortbeton gefüllt werden, um ein im Wesentlichen monolithisches Bauwerk zu erhalten. Derartige Doppelwand-Systeme können als sogenannte Sandwichwände mit einer Kernisolierung versehen sein, welche zwischen den beiden miteinander verbundenen Wandelementen werksseitig vorgesehen wird. Eine derartige Kernisolierung von Betonelementen spart Zeit und hilft, Kältebrücken zu vermeiden.

Zur Verbindung von Isolierplatten, beispielsweise Hartschaumplatten aus Styropor oder dergleichen, ist es bekannt, diese mit Verbindungsankern aus Metall, Kunststoff, Glas- oder Carbonfasern auszustatten, welche in das zu isolierende

Wandelement eingegossen werden können. Auf diese Weise ist eine besonders zuverlässige und rasche Verbindung der Isolierplatten an den Wandelementen möglich. Das Vorsehen von Verbindungsankern macht es jedoch erforderlich, dass hierfür eine Vielzahl von Bohrungen in die Isolierplatte eingebracht werden, um die Verbindungsanker durch die Isolierplatte durchstecken zu können. Zudem müssen die Isolierplatten individuell auf die für die zu fertigenden Wandelementen passenden Maße zugeschnitten werden. In einigen Anwendungsfällen werden auch Nuten oder Kanäle in die Isolierplatten eingefräst, um Aussparungen für Einbauteile oder Sanitär- und Elektroinstallationen vorzubereiten.

Diese Bearbeitung von Isolierplatten erfolgt bisher aufgrund des vergleichsweise geringen Bedarfs an Isolierplatten entweder händisch oder bei größerem Bedarf an Isolierplatten in unterschiedlichen Arbeitsstationen, wobei beispielsweise in einer ersten Arbeitsstation die Isolierplatte zugeschnitten wird, dann in eine zweite Arbeitsstation transportiert wird, in welcher Löcher für die Verankerungen gebohrt werden und gegebenenfalls die Isolierplatte in eine weitere Arbeitsstation transportiert wird, in welcher Aussparungen für spätere Installationsarbeiten ausgefräst werden. Dies ist mit einem vergleichsweise hohen Platzbedarf für die unterschiedlichen Arbeitsstationen verbunden. Zudem besteht die Notwendigkeit, die einzelnen zu bearbeitenden Isolierplatten so zu kennzeichnen, dass an jeder Bearbeitungsstation die richtigen Arbeitsschritte individuell durchgeführt werden können.

Aufgabe der vorliegenden Erfindung ist es demgegenüber, eine Arbeitsstation sowie ein Verfahren zur Herstellung eines isolierten Betonteils bereitzustellen, die bei geringerem Platzverbrauch eine qualitativ hochwertige Bearbeitung von Isolierplatten ermöglichen.

Diese Aufgabe wird erfindungsgemäß mit einer Arbeitsstation der eingangs genannten Art im Wesentlichen dadurch gelöst, dass die Werkzeugmaschine wenigstens ein Bohrwerkzeug und wenigstens ein Schneidwerkzeug aufweist, wobei der Werkzeugmaschine eine Steuerung derart zugeordnet ist, dass die Werkzeugmaschine durch gleichzeitiges oder aufeinanderfolgendes Bohren und/oder Schneiden automatisiert einer Isolierplatte anhand vorgebbarer Geometriedaten (z.B. CAD-Daten) bearbeitet.

Der Erfindung liegt dabei der Gedanke zugrunde, möglichst sämtliche eine maschinelle Bearbeitung erfordernden Schritte in nur einer einzigen Arbeitsstation auszuführen, so dass ein Transport einer zu bearbeitenden Isolierplatte zwischen einzelnen Arbeitsstationen und damit verbunden ein mehrmaliges definiertes Einspannen der zu bearbeitenden Isolierplatte entfallen kann. Die Bearbeitungszeit jeder einzelnen Isolierplatte kann dadurch gesenkt werden. Zudem ist der Platzbedarf einer derartigen Arbeitsstation erheblich geringer als der einzelner Arbeitsstationen einschließlich der entsprechenden Fördereinrichtungen. Entgegen der Vermutung, dass bei nacheinander erfolgender Bearbeitung einer Isolierplatte innerhalb einer einzelnen Arbeitsstation der Durchsatz von Isolierplatten aufgrund des Stillstands der gerade nicht benutzten Werkzeuge verlängert wird, wurde überraschend festgestellt, dass durch den Wegfall des Transports zwischen einzelnen Arbeitsstationen und des damit verbundenen mehrmaligen definierten Einspannens der zu bearbeitenden Isolierplatte Zeitverluste weitestgehend kompensiert werden können. Die verbesserte Bearbeitungsqualität sowie die vereinfachte Handhabung sind weitere Vorteile bei der Zusammenfassung verschiedener Bearbeitungsschritte innerhalb einer einzigen Arbeitsstation.

Unter einer Arbeitsstation wird dabei eine Bearbeitungseinheit verstanden, in welcher eine Isolierplatte bearbeitet werden kann, ohne dass zwischen zwei Bearbeitungsschritten ein Transfer der Isolierplatte zu einem anderen Werkzeug erforderlich ist. Dies schließt nicht aus, dass die Isolierplatte zwischen einzelnen Bearbeitungsschritten gedreht und/oder geringfügig linear bewegt wird. Allerdings ist die Strecke, um die die Isolierplatte ggf. bewegt wird, kleiner als die Abmessungen der Isolierplatte.

Für die Erstellung von Bohrungen für Verbindungsanker hat es sich als besonders vorteilhaft erwiesen, wenn die Werkzeugmaschine mehrere, insbesondere in einer Reihe nebeneinander angeordnete Bohrwerkzeuge zur gleichzeitigen Herstellung mehrerer Bohrungen aufweist. Auf diese Weise können mehrere Bohrungen in einem definierten Raster in rascher Zeit eingebracht werden, was das spätere Einbringen von häufig ebenfalls in einem definierten Raster vorgesehenen Verbindungsankern erleichtert.

Wenn die erfindungsgemäße Arbeitsstation mit einer Werkzeugmaschine ausgestattet ist, die zusätzlich ein Fräswerkzeug aufweist, lässt sich neben dem Zuschneiden und Einbringen von Bohrungen in der selben Arbeitsstation auch eine Aussparung durch Fräsen einbringen, welche zur Vorbereitung von Einbauteilen sowie Sanitär- oder Elektroinstallationen dienen kann.

Nach einer besonders bevorzugten Ausführungsform der Erfindung weisen die Werkzeugmaschine und/oder der Tisch Antriebsmittel zur Bewegung wenigstens eines der Werkzeuge relativ zu der zu bearbeitenden Isolierplatte auf. Diese Antriebsmittel sind dabei vorzugsweise derart ausgestaltet und eingerichtet, dass das wenigstens eine Werkzeug während des Bearbeitens der Isolierplatte um wenigstens zwei, insbesondere um drei, zueinander senkrechten Achsen relativ zu der Isolierplatte drehbar oder schwenkbar ist. Auf diese Weise lassen sich Isolierplatten hinsichtlich Dicke, Länge, Breite und Schrägen auf Maß schneiden, Bohrungen nach festem Raster oder mit separater Einstellung jedes einzelnen Bohreinsatzes anfertigen und Vorbereitungen auch für geometrisch komplex gestaltete Einbauteile vorsehen.

Die Werkzeugmaschine kann hierzu wenigstens einen Ständer aufweisen, der relativ zu dem Tisch in einer ersten Richtung, bspw. horizontal, bewegbar ist. Weiter ist an dem Ständer wenigstens ein Werkzeughalter vorgesehen, an oder in dem wenigstens ein Bohrwerkzeug und/oder wenigstens ein Schneidwerkzeug gelagert ist. Der Werkzeughalter ist relativ zu dem Tisch und relativ zu dem Ständer in einer zweiten Richtung, bspw. vertikal, bewegbar. Vorzugsweise sind für das wenigstens eine Bohrwerkzeug und das wenigstens eine Schneidwerkzeug verschiedene Werkzeughalter vorgesehen, die unabhängig voneinander bewegbar sind. Um große Kippmomente zu vermeiden, wird es weiter bevorzugt, wenn statt eines einzelnen Ständers zwei, bspw. einander beidseits des Tisches gegenüber angeordnete, Ständer vorgesehen sind, in denen der oder die Werkzeughalter gemeinsam gelagert sind. Die beiden Ständer sind dann synchron bewegbar.

In Weiterbildung des Erfindungsgedankens ist es vorgesehen, dass in die Arbeitsstation auch eine Einrichtung zum Einbringen von Verbindungsankern in die Bohrungen der Isolierplatte vorgesehen ist. Diese Einrichtung kann aus Platzgründen beispielsweise in einer Ebene oberhalb oder unterhalb des Tisches vorgesehen sein. Auf diese Weise ist es möglich, innerhalb einer einzigen Arbeitsstation nicht nur die Bearbeitung der Isolierplatte vollständig abzuschließen, sondern zusätzlich auch die zur Verankerung erforderlichen Verbindungselemente einzubringen.

Um die Handhabung zwischen dem Tisch mit der Werkzeugmaschine in der einen Ebene der Arbeitsstation und der Einrichtung zum Einbringen von Verbindungsankern zu erleichtern, kann eine weitere Fördereinrichtung zwischen dem Tisch und der Einrichtung zum Einbringen von Verbindungsankern vorgesehen sein. Eine solche Fördereinrichtung kann beispielsweise eine Vakuum-Hebevorrichtung aufweisen, die manuell oder computergesteuert betrieben wird.

Es wird besonders bevorzugt, wenn die erfindungsgemäße Arbeitsstation als ein System bestandteil in eine sogenannte Umlaufanlage zur Herstellung von zumindest teilweise isolierten Betonteilen integriert ist. Unter einer Umlaufanlage wird ein System verstanden, bei welchem insbesondere mittels Umlaufpaletten in Produktionsreihenfolge einzelne Arbeitsstationen angefahren werden, in denen die zur Herstellung einer isolierten Betonwand oder eines anderen Betonteils erforderlichen Schritte individuell ausgeführt werden können.

Die der Erfindung zugrunde liegenden Aufgabe wird weiter durch ein Verfahren zum Bearbeiten einer bspw. mit einem Betonteil verbindbaren Isolierplatte gelöst, bei welchem zunächst eine Isolierplatte vor dem Verbinden mit dem Betonteil auf einen Tisch in einer Arbeitsstation aufgebracht, anschließend innerhalb der Arbeitsstation mit zwei unterschiedlichen Bearbeitungswerkzeugen einer Werkzeugmaschine nacheinander oder gleichzeitig unter Nutzung von CAD-Daten bearbeitet und anschließendes aus der Arbeitsstation ausgebracht wird. Zwischen den Bearbeitungsschritten wird die Isolierplatte nicht aus der einen Arbeitsstation entnommen.

Dank moderner CAD-Systeme ist die Bereitstellung der Informationen über das Aussehen und die Größe einer für ein Betonteil erforderlichen Isolierung in Datenform gegeben. Über eine Softwareschnittstelle kann beispielsweise ein Leitrechner diese CAD-Daten individuell zu jeder Umlaufpalette an die Steuerung einer Arbeitsstation übermitteln, welche die gewünschte Isolierplatte in Dicke und Gehrung zurecht sägt, Bohrungen setzt und Aussparungen für Einbauteile oder die Sanitär- oder Elektroinstallation fräst. Mittels einer Vakuum-Hebevorrichtung oder einer anderen geeigneten Fördereinrichtung wird die Handhabung der Isolierplatte vor und nach der Bearbeitung bis hin zum Einbringen auf eine Umlaufpalette ermöglicht. Grundsätzlich können die einzelnen Bearbeitungsschritte innerhalb der Arbeitsstation nacheinander oder zumindest teilweise auch gleichzeitig ausgeführt werden.

Das erfindungsgemäße Verfahren kann weiter den Schritt aufweisen, dass Verbindungsanker innerhalb der Arbeitsstation in die Isolierplatte eingebracht werden. Dies erfolgt vorzugsweise in einer in Einbaulage gegenüber der Werkzeugmaschine bzw. deren Tisch in vertikaler Richtung versetzten Ebene. Hierzu werden vorzugsweise mehrere bearbeitete Isolierplatten gleichzeitig in die unterhalb der Werkzeugmaschine bzw. des Tisches gelegene Ebene gefördert und dort einzeln mit Verbindungsankern versehen.

Weiter wird es bevorzugt, wenn die derart bearbeitete Isolierplatte als Bestandteil der Form oder Schalung zur Herstellung eines beispielsweise doppelwandigen Außenwandelements verwendet wird. Auf diese Weise lässt sich die Verankerung der Isolierplatte in das zu fertigende Betonteil eingießen, was eine rasche und besonders zuverlässige Verbindung ermöglicht.

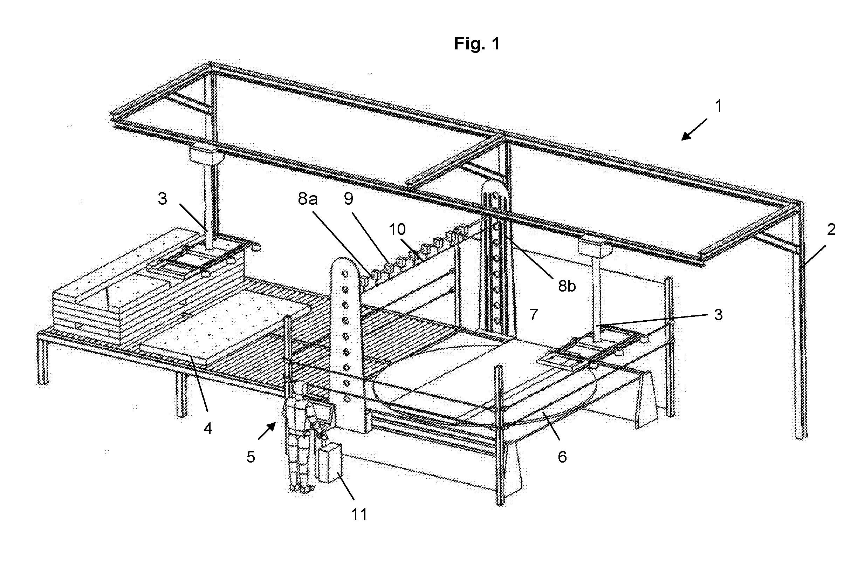

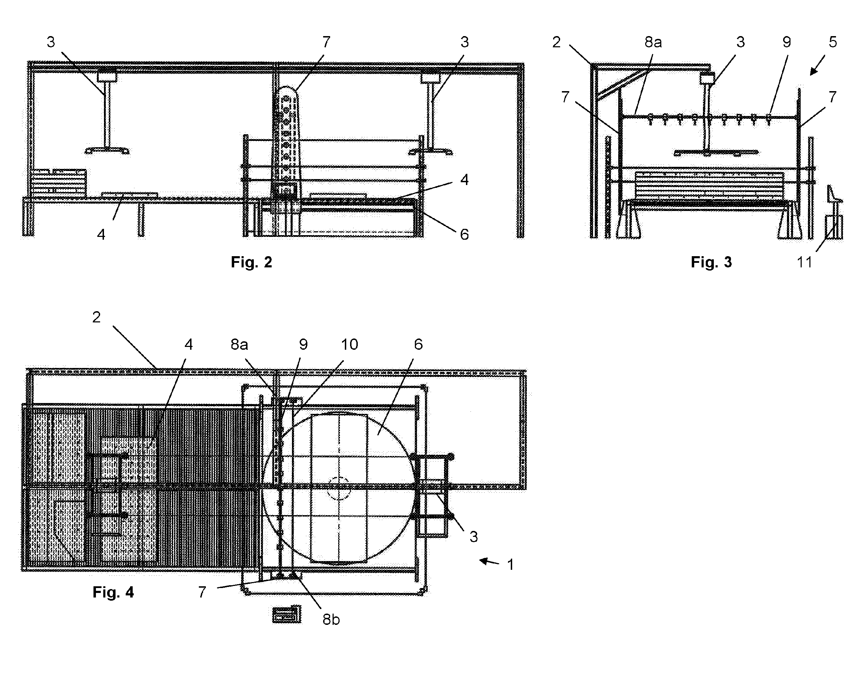

Die Erfindung wird nachfolgend anhand eines Ausführungsbeispiels und unter Bezugnahme auf die Zeichnung näher erläutert. Dabei bilden alle beschriebenen und/oder bildlich dargestellten Merkmale für sich oder in beliebiger sinnvoller Kombination den Gegenstand der Erfindung unabhängig von der Zusammenfassung in den Ansprüchen oder deren Rückbezügen.

Es zeigen schematisch:

| | |
|---|---|
| Fig. 1 | eine erfindungsgemäße Arbeitsstation in Perspektivansicht, |
| Fig. 2 | die Arbeitsstation nach Fig. 1 in Seitenansicht, |
| Fig. 3 | die Arbeitsstation nach Fig. 1 in Frontansicht und |
| Fig. 4 | die Arbeitsstation nach Fig. 1 in Draufsicht. |

Die in den Figuren dargestellte Arbeitsstation 1 weist einen Tragrahmen 2 mit zwei übereinander liegenden Ebenen auf. In der in den Figuren oberen Ebene der Arbeitsstation 1 ist eine Fördereinrichtung 3 zum Transport von Isolierplatten 4 vorgesehen. Die Fördereinrichtung 3 weist hierzu bspw. zwei Vakuum-Hebevorrichtungen sowie Mittel zu deren vertikaler und horizontaler Bewegung auf. In der darunter liegenden Ebene sind eine Werkzeugmaschine 5 mit mehreren Bearbeitungswerkzeugen sowie ein Tisch 6 zur Aufnahme einer zu bearbeitenden Isolierplatte 4 vorgesehen.

In der dargestellten Ausführungsform ist die Werkzeugmaschine 5 mit zwei Ständern 7 ausgebildet, die auf einander gegenüberliegenden Seiten des Tisches 6 angeordnet sind. Für weitere Werkzeuge und/oder zum parallelen Bearbeiten einer Platte mit mehreren Werkzeugen können zusätzliche Ständer (nicht dargestellt) vorgesehen werden, die ggf. unabhängig voneinander betätigbar sind. Über einen nicht dargestellten Antrieb können die beiden Ständer 7 horizontal relativ zu dem Tisch verfahren werden. in den beiden Ständern 7 sind zwei Werkzeughalter 8a, 8b gelagert, die in vertikaler Richtung innerhalb der Ständer 7 unabhängig voneinander verfahrbar sind. In dem einen Werkzeughalter 8a sind mehrere Bohrer 9 in einer Reihe angeordnet. Diese Bohrer 9 sind so ausgerichtet, dass gleichzeitig mehrere Löcher in einem definierten Raster in die Isolierplatte 4 eingebracht werden können. Diese dienen der Aufnahme von Verbindungsankern zur Anbindung der Isolierplatte an ein Betonteil. In dem anderen Werkzeughalter 8b ist ein Schneiddraht 10 vorgesehen, der ein Zuschneiden der Isolierplatte 4 ermöglicht. Zusätzlich können weitere Werkzeuge, z.B. wenigstens eine Säge, wenigstens eine Fräse, wenigstens ein Manipulator zum Einsetzen von Ankern in die Isolierplatte, oder dgl. Werkzeug, vorgesehen werden.

Der Tisch 6 ist drehbar in der Arbeitsstation 1 gelagert, so dass die zu bearbeitende Isolierplatte 4 in der Arbeitsstation 1 befestigt und ggf. zur Bearbeitung gedreht werden kann. Alternativ oder zusätzlich können auch die Bearbeitungswerkzeuge innerhalb der Werkzeugmaschine 5 um zumindest zwei zueinander senkrechte Achsen schwenkbar gelagert sein, so dass die Isolierplatte 4 und die Werkzeuge 9, 10 für die Bearbeitung relativ zueinander bewegt werden können. In der in den Figuren nicht dargestellten weiteren Ebene der Arbeitsstation 1 kann bspw. eine Einrichtung zum Einbringen von Verbindungsankern in Bohrungen einer Isolierplatte 4 vorgesehen. Hierzu weist die Einrichtung zum Einbringen von Verbindungsankern mehrere Paletten auf, auf welchen die vorzugsweise in Form einer Matte oder dergleichen vorgefertigten Verbindungsanker aufgebracht sind. Die Isolierplatten 4 werden dann mittels einer weiteren Fördereinrichtung so auf die Paletten bzw. die Verbindungsanker abgesenkt, dass die Verbindungsanker durch Bohrungen in der Isolierplatte 4 treten. Zwischen der in den Figuren unteren Ebene und der ggf. vorgesehenen weiteren Ebene der Arbeitsstation 1 kann eine weitere Fördereinrichtung vorgesehen sein, die zum Transport eines Stapels bearbeiteter Isolierplatten 4 geeignet ist. Die Paletten können anschließend zusammen mit den fertigen Isolierplatten zu einer weiteren Bearbeitungsstation innerhalb einer nicht näher dargestellten Umlaufanlage zur Fertigung von Betonteilen transportiert werden, um dort mit einem Betonteil verbunden zu werden.

Die Arbeitsstation 1 weist zusätzlich eine schematisch angedeutete Steuerung 11 auf, welche mit der Werkzeugmaschine 5, dem Tisch 6 sowie den Fördereinrichtungen 3 derart zusammen wirkt, dass Isolierplatten 4 definiert auf den Tisch 6 gebracht, dort mittels der Werkzeugmaschine 5 bearbeitet und ggf. anschließend in die weitere Ebene der Arbeitsstation 1 gebracht werden, in welcher die Isolierplatten 4 mit Verbindungsankern versehen werden.

Die Arbeitsstation 1 ermöglicht eine wirtschaftliche Herstellung von Isolierplatten 4, die zur Isolierung von Betonfertigteilen eingesetzt werden. Die automatisierte

Vorbereitung und Bereitstellung von Isolierplatten ermöglicht es, eine Isolation in definierten Zeitabläufen und kurzen Zeitspannen zu realisieren. Dabei erlaubt die Arbeitsstation 1 gleichzeitig das Bohren, Fräsen und Schneiden beliebiger Winkel von Hartschaumplatten. Die Grundidee ist hierbei die computergeschützte Produktion von sogenannten Sandwichwänden und von Betonelementen mit Kernisolierung.

Zur Herstellung eines Betonteils mit Isolierung ist die schnelle und genaue Einbringung der Isolierung vor dem Aushärten des Betons erforderlich. Auf diese Weise lassen sich Kältebrücken vermeiden und Verbindungsanker fest in der Betonschicht platzieren. In automatisierten Anlagen zur Herstellung von Betonteilen werden die Geometriedaten der zu fertigenden Betonteile sowie deren Isolierung mit CAD-Systemen entworfen. Hierdurch ist es möglich, Informationen über Aussehen und Größe der Isolierung in Datenform bereitzustellen. Ein in den Figuren nicht dargestellter Leitrechner sendet hierzu die individuellen CAD-Daten für jede zu fertigende Isolierplatte 4 über eine Softwareschnittstelle an die Arbeitsstation 1. Danach wird die Isolierplatte 4 in der Arbeitsstation 1 hinsichtlich der Dicke und Gehrung passend zugeschnitten, es werden entsprechend den individuellen Anforderungen Bohrungen gesetzt und gegebenenfalls Aussparungen für Einbauteile und die Sanitär- oder Elektroinstallation gefräst. Eine Vakuum-Hebevorrichtung der Fördereinrichtungen 3 erlaubt dabei eine einfache Handhabung der Isolierplatten 4 vor und nach dem Schneiden bis hin zur Einbringung auf die Paletten.

Für die Fertigung von Betonteilen wird die Bearbeitung von Isolierplatten 4 in der Arbeitsstation 1 vorzugsweise in eine Umlaufanlage eingebunden. Dies erfolgt bevorzugt nach der Schüttelstation. Hierbei werden die fertig bearbeiteten Isolierplatten 4 in der Produktionsreihenfolge der Umlaufpaletten zur Fertigung der Betonteile sortiert und bereitgestellt. Nach dem Aufbringen einer ersten Betonschicht und einem kurzen Härten wird eine Isolierplatte 4 einschließlich deren Verankerung eingebracht. Anschließend wird die Palette in den Umlauf vor der Schüttelstation zurückgeführt. Auf diese Weise ist es möglich, eine Isolierschicht in einem Zeitfenster von etwa 10 Minuten einzubringen.

### Bezugszeichenliste:

- 1: Arbeitsstation
- 2: Tragrahmen
- 3: Fördereinrichtung
- 4: Isolierplatte
- 5: Werkzeugmaschine
- 6: Tisch
- 7: Ständer
- 8a, b: Werkzeughalter
- 9: Bohrer
- 10: Schneiddraht
- 11: Steuerung

## Patentansprüche

1. Arbeitsstation zur individuellen, automatisierten Bearbeitung von Isolierplatten (4) mit einem Tisch (6) zur Aufnahme wenigstens einer zu bearbeitenden Isolierplatte (4), einer Fördereinrichtung (3) zum Transport von Isolierplatten (4) zu und von dem Tisch (6) und wenigstens einer Werkzeugmaschine (5) mit Werkzeugen (9, 10), die zur Bearbeitung einer Isolierplatte (4) neben und/oder über dem Tisch (6) positionierbar sind, **dadurch gekennzeichnet, dass** die Werkzeugmaschine (5) wenigstens ein Bohrwerkzeug (9) und wenigstens ein Schneidwerkzeug (10) aufweist, und dass der Werkzeugmaschine (5) eine Steuerung (11) derart zugeordnet ist, dass die Werkzeugmaschine (5) durch gleichzeitiges oder aufeinanderfolgendes Bohren und/oder Schneiden automatisiert eine Isolierplatte (4) anhand vorgebbarer Geometriedaten bearbeitet.

2. Arbeitsstation nach Anspruch 1, **dadurch gekennzeichnet, dass** die Werkzeugmaschine (5) mehrere, insbesondere in einer Reihe nebeneinander angeordnete Bohrwerkzeuge (9) zur gleichzeitigen Herstellung mehrerer Bohrungen aufweist.

3. Arbeitsstation nach Anspruch 1 oder 2, **dadurch gekennzeichnet, dass** die Werkzeugmaschine (5) zusätzlich ein Fräswerkzeug aufweist.

4. Arbeitsstation nach einem der vorhergehenden Ansprüche, **dadurch gekennzeichnet, dass** die Werkzeugmaschine (5) und/oder der Tisch (6) Antriebsmittel zur Bewegung wenigstens eines der Werkzeuge (9, 10) relativ zu der zu bearbeitenden Isolierplatte (4) aufweist, die derart ausgestaltet und eingerichtet sind, dass das wenigstens eine Werkzeug (9, 10) während des Bearbeitens der Isolierplatte (4) um wenigstens zwei, insbesondere drei, zu einander senkrechten Achsen relativ zu der Isolierplatte (4) drehbar oder schwenkbar ist.

5. Arbeitsstation nach einem der vorhergehenden Ansprüche, **dadurch gekennzeichnet, dass** die Werkzeugmaschine (5) wenigstens einen Ständer (7) aufweist, der relativ zu dem Tisch (6) in einer ersten Richtung bewegbar ist, wobei an dem Ständer (7) wenigstens ein Werkzeughalter (8a, 8b), an oder in dem wenigstens ein Bohrwerkzeug (9) und/oder wenigstens ein Schneidwerkzeug (10) gelagert ist, vorgesehen ist, der relativ zu dem Tisch (6) und relativ zu dem Ständer (7) in einer zweiten Richtung bewegbar ist.

6. Arbeitsstation nach einem der vorhergehenden Ansprüche, **dadurch gekennzeichnet, dass**, insbesondere unterhalb des Tisches (6), eine Einrichtung zum Einbringen von Verbindungsankern in Bohrungen einer Isolierplatte (4) vorgesehen ist.

7. Arbeitsstation nach einem der vorhergehenden Ansprüche, **dadurch gekennzeichnet, dass** eine weitere Fördereinrichtung zwischen dem Tisch (6) und der Einrichtung zum Einbringen von Verbindungsankern vorgesehen ist.

8. Arbeitsstation nach einem der vorhergehenden Ansprüche als Bestandteil einer Umlaufanlage zur Herstellung von zumindest teilweise isolierten Betonteilen.

9. Verfahren zum Bearbeiten einer mit einem Betonteil verbindbaren Isolierplatte, das folgende Schritte umfasst:
- Aufbringen einer Isolierplatte (4) vor dem Verbinden mit dem Betonteil auf einen Tisch (6) in einer Arbeitsstation (1),
- anschließendes Bearbeiten der Isolierplatte (4) innerhalb der Arbeitsstation (1) mit zwei unterschiedlichen Bearbeitungswerkzeugen (9, 10) einer Werkzeugmaschine (5) nacheinander oder gleichzeitig unter Nutzung von CAD-Daten und
- anschließendes Ausbringen der bearbeiteten Isolierplatte (4) aus der Arbeitsstation (1).

10. Verfahren nach Anspruch 9, **dadurch gekennzeichnet, dass** die Isolierplatte (4) in der Arbeitsstation (1) mit wenigstens einem Bohrwerkzeug (9), einem Schneidwerkzeug (10) und/oder einem Fräswerkzeug bearbeitet wird.

11. Verfahren nach einem der Ansprüche 9 oder 10, **dadurch gekennzeichnet, dass** die Isolierplatte (4) als Bestandteil der Form oder Schalung zur Herstellung eines, insbesondere doppelwandigen, Außenelements verwendet wird.

12. Verfahren nach einem der Ansprüche 9 bis 11, **dadurch gekennzeichnet, dass** in die Isolierplatte (4) vor deren Ausbringen aus der Arbeitsstation (1) Verbindungsanker eingesetzt werden.
